# EUROPÄISCHE PATENTANMELDUNG

(11) **EP 0 769 358 A2**
(43) Veröffentlichungstag der Anmeldung: **23.04.1997**
(21) Anmeldenummer: 96115886.2
(22) Anmeldetag: 04.10.1996
(51) Int. Cl.: B29C 43/34, B29C 31/08

(54) **Verfahren und Vorrichtung zum Einlegen eines Materialstrangs in eine Form**

(30) Priorität: 04.10.1995 DE 19537017; 02.11.1995 DE 19540815
(71) Anmelder: Kannegiesser KMH Kunststofftechnik GmbH, 32429 Minden (DE)
(72) Erfinder: Heinz, Engelbert, 32602 Vlotho (DE); Kiesau, Wilfried, 32602 Vlotho (DE)
(74) Vertreter: Möller, Friedrich, Dipl.-Ing.

(57) **Zusammenfassung**

Verfahren und Vorrichtung zum Einlegen eines Material strangs (26) in eine Form (11).

Die Herstellung von Formkörpern aus vorzugsweise glasfaserverstärktem Kunststoff kann erfolgen durch Einlegen eines entsprechenden Materialstrangs (26) aus plastifiziertem Kunststoff in eine geöffnete Form (11). Dazu wird bislang ein Materialstrang (26) mit konstantem Querschnitt geradlinig auf einer unteren Formhälfte (16) der Form (11) abgelegt. Um diesen gleichförmigen Materialstrang (26) in die Kontur des gewünschten Formkörpers zu bringen, sind relativ lange Fließwege erforderlich, die sich nachteilig auf die Eingenschaften des Kunststoffs, insbesondere die Glasfasern zur Verstärkung desselben, auswirken.

Die Erfindung sieht vor, den Querschnitt des Materialstrangs (26) und/oder seine Relativlage zur unteren Formhälfte (16) bedarfsmäßig, nämlich unter Berücksichtigung der Kontur des herzustellenden Formkörpers, zu verändern. Dadurch ist es möglich, den Materialstrang (26) der Kontur des herzustellenden Formkörpers folgend auf der unteren Formhälfte (16) abzulegen und den Querschnitt des Materialstrangs (26) an die sich in Längsrichtung der unteren Formhälfte (16) ändernden Abmessungen des herzustellenden Formkörpers anzupassen. Aufgrund dieser Anpassung werden die Fließwege des plastifizierten Kunststoffs reduziert und eventuelle Beeinträchtigungen der zur Verstärkung des Kunststoffs dienenden Glasfasern eliminiert.

## Beschreibung

Die Erfindung betrifft ein Verfahren zum Einlegen eines Materialstrangs in eine Form gemäß dem Oberbegriff des Anspruchs 1. Des weiteren betrifft die Erfindung eine Vorrichtung zum Einlegen eines Materialstrangs in eine Form gemäß dem Oberbegriff des Anspruchs 6.

Die Erfindung bezieht sich auf die Formgebung von Kunststoffen. Bei den Kunststoffen kann es sich um Thermoplaste, Duroplaste oder Elastomere handeln, die vorzugsweise verstärkt sind durch insbesondere im Kunststoff eingebettete Fasern wie beispielsweise Glasfasern.

Es geht in diesem Zusammenhang um ein Formgebungsverfahren, bei dem der zu verformende Kunststoff im plastischen Zustand in die Form eingelegt wird. Zu diesem Zweck dient ein Plastifizieraggregat, das einen plastifizierten Strang des zu verarbeitenden Kunststoffs in die geöffnete Form einlegt. Dazu ist eine am vorderen Ende des Plastifizieraggregats angeordnete Düse mit einer Austrittsöffnung für den Materialstrang längs zwischen den auseinandergefahrenen Formhälften der Form verfahrbar, wodurch ein endlicher Strang des plastifizierten Kunststoffs einschließlich der Verstärkung auf vorzugsweise die untere Formhälfte ablegbar ist.

Üblicherweise wird ein geradliniger Strang konstanten Querschnitts auf der unteren Formhälfte abgelegt. Diese Art der Ablage läßt die Kontur des herzustellenden Gegenstands unberücksichtigt. Die Folge ist, daß der Kunststoff in der Form relativ lange Fließwege zurücklegen muß, die sich vor allem bei verstärkten Kunststoffen negativ auswirken, weil z.B. zur Verstärkung dienende Fasern entlang ihres Fließweges brechen und damit kürzer werden. Man spricht in diesem Zusammenhang von einem "Zerstören" der Fasern, weil kurze Fasern keine nennenswerte Verstärkung des Kunststoffs mehr herbeiführen.

Hiervon ausgehend liegt der Erfindung die Aufgabe zugrunde, ein Verfahren und eine Vorrichtung zum Ablegen eines Materialstrangs in eine Form zu schaffen, womit eine Schonung des Materials, insbesondere Kunststoffs, gewährleistet ist.

Ein Verfahren zur Lösung dieser Aufgabe weist die Maßnahmen des Anspruchs 1 auf. Durch die in Abhängigkeit von der Kontur des herzustellenden Gegenstands erfolgende Veränderung des Querschnitts des Material strangs und/oder die Veränderung der Relativlage des Materialstrangs zur entsprechenden Formhälfte ist es möglich, den Materialstrang unter Berücksichtigung der Kontur des jeweils herzustellenden Formkörpers in der entsprechenden Formhälfte abzulegen. Dadurch werden die Fließwege des den Materialstrang bildenden plastifizierten Kunststoffs verkürzt. Die Folge ist eine Schonung des (Kunststoff-) Materials bei seiner Formgebung. Insbesondere werden eventuelle Verstärkungen im Material, beispielsweise Glasfasern, in Folge der kürzeren Fließwege nicht oder nur im geringeren Maße gebrochen. Auf diese Weise lassen sich die insbesondere festigkeitsmäßigen Eigenschaften des zur Bildung des Formkörpers verwendeten Kunststoffmaterials optimal nutzen.

Vorzugsweise werden der Querschnitt und/oder die Relativlage des Material strangs kontinuierlich verändert. Dadurch ist eine stufenlose Anpassung des Material strangs an die gegebene Formkontur möglich.

Eine Veränderung des Querschnitts des Materialstrangs kann erfolgen durch eine Vergrößerung oder Verkleinerung der Breite der Austrittssöffnung des Materialstrangs aus einem Plastifizieraggregat. Ebenso kann die Dicke des Materialstrangs verändert werden. Darüber hinaus ist es denkbar, die Ablegegeschwindigkeit des Strangs auf der Formhälfte zu verändern. Schließlich kann die Austrittsgeschwindigkeit des Strangs aus der Austrittsöffnung verändert werden. Die genannten Maßnahmen können einzeln (alternativ) oder auch kombiniert eingesetzt werden, um den Querschnitt bzw. die Querschnittsfläche des Materialstrangs zu vergrößern oder zu verkleinern.

Die Relativlage des Materialstrangs zur entsprechenden Formhälfte wird dadurch verändert, daß die Austrittsöffnung des Materialstrangs aus dem Plastifizieraggregat zusätzlich zur geradlinigen Ablegebewegung des Material strangs auf der Formhälfte in Längsrichtung der Form in einer hiervon abweichenden Richtung insbesondere quer zur Längsrichtung der Form bewegt wird. Auf diese Weise lassen sich durch einzelne oder auch überlagerte Bewegungen in Längsrichtung und/oder Querrichtung zur Form Materialstränge mit beliebigen Verläufen auf der unteren Formhälfte ablegen.

Eine Vorrichtung zur Lösung der der Erfindung zugrundeliegenden Aufgabe weist die Merkmale des Anspruchs 6 auf. Demnach ist der Querschnitt der Austrittsöffnung des Materialstrangs aus dem Plastifizieraggregat veränderbar und/oder die Austrittsöffnung nicht nur in Längsrichtung der Form verfahrbar, sondern auch in einer von der Längsrichtung abweichenden Richtung, insbesondere quer zur Form. Durch die zusätzliche Verfahrbarkeit der Austrittsöffnung in einer von der Ablegerichtung abweichenden Richtung läßt sich der Materialstrang an die Kontur des Formnestes anpassen. Der Materialstrang kann im Formnest so abgelegt werden, daß er der Kontur derselben größtenteils folgt. Alternativ wird nur der Querschnitt des Materialstrangs verändert. Auch hierdurch kann allein Einfluß auf die sich in Ablegerichtung ändernde Größe der Kontur des herzustellenden Formkörpers genommen werden.

Besonders vorteilhaft ist es, wenn sowohl der Querschnitt der Austrittsöffnung des Materialstrangs aus dem Plastifizieraggregat verändert wird als auch die Austrittsöffnung quer zur Ablegerichtung verfahrbar ist. Es lassen sich dann gleichzeitig der Querschnitt des Material strangs als auch seine Relativlage zur Formhälfte verändern, wodurch eine den Bedürfnissen entsprechende Anpassung an den Konturverlauf und die Konturgröße der in der unteren Formhälfte enthaltenen Vertiefung für den herzustellenden Formkörper möglich ist.

Die quer zur Längsrichtung der Form erfolgende Verfahrbarkeit der Austrittsöffnung kann auf verschiedene Weise erreicht werden. Zum einen ist es möglich, die mit der Austrittsöffnung versehene Düse am Ende des Plastifizieraggregats vor demselben seitlich zu verfahren. Ebenso ist es möglich, mindesten einen Teil des Plastifizieraggregats mit der Düse quer zu verfahren, so daß die Längsmittelachse des Plastifizieraggregats seitlich hin- und herbewegbar ist. Als besonders vorteilhaft hat es sich erwiesen, das Plastifizieraggregat um eine senkrechte Schwenkachse zu verschwenken. so daß die Längsmittelachse des Plastifizieraggregats derart gegenüber der Längsachse der Form veränderbar ist, daß beide sich gegebenenfalls unter einem veränderlichen Winkel schneiden.

Die Veränderung des Querschnitts der Austrittsöffnung der Düse des Plastifizieraggregats erfolgt durch mindestens ein Verschlußorgan, dessen Konturen mindestens einen Teil der Austrittsöffnung umfassen. Zur Veränderung der Dicke des Materialstrangs ist ein Verschlußorgan vorgesehenen, mit dem die Länge der Austrittsöffnung, nämlich das Maß des Schlitzes derselben entlang der Längsmittelachse des Plastifizieraggregats, veränderbar ist. Alternativ oder zusätzlich ist die Breite der Austrittsöffnung, d. h. die Erstreckungsrichtung der Austrittsöffnung quer zur Längsmittelachse des Plastifizieraggregats veränderbar, und zwar vorzugsweise durch ein anderes Verschlußorgan. Dieses Verschlußorgan weist eine Ausnehmung mit z.B. divergierenden, gegenüberliegenden Kanten auf, deren Abstand sich in Längserstreckungsrichtung des Plastifizieraggregats ändert. Die Kanten können einen geradlinigen Verlauf aufweisen, so daß die Ausnehmung eine V-förmige Fläche aufweist. Darüberhinaus können die Kanten auch bogenförmig verlaufen, so daß die Ausnehmung über z.B. eine halbrunde oder halb elliptische Fläche verfügen. Die Folge ist, daß bei einer Verschiebung dieses Verschlußorgans auf der Längsmittelachse des Plastifizieraggregats die Seiten der Austrittsöffnung mehr oder weniger eingeschnürt werden und sich damit der Querschnitt, insbesondere die Breite des Material strangs ändert.

Ein bevorzugtes Ausführungsbeispiel der Erfindung wird nachfolgend anhand der Zeichnung näher erläutert. In dieser zeigen:

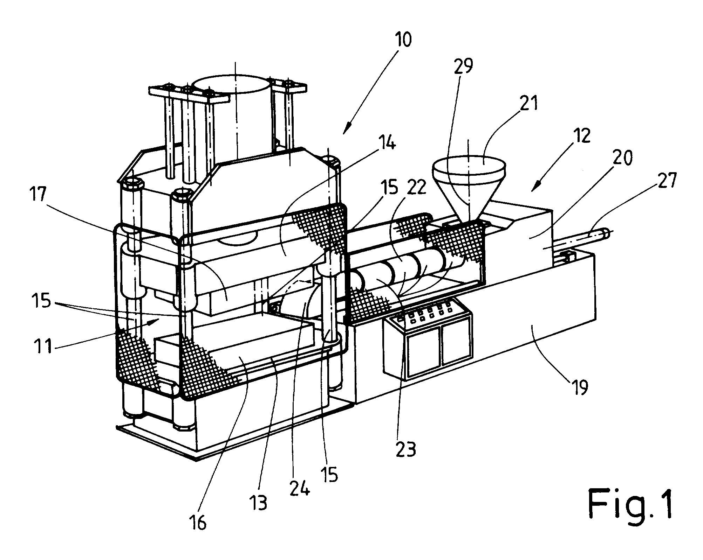

- Fig. 1: eine perspektivische Darstellung der erfindungsgemäßen Vorrichtung,
- Fig. 2: eine Draufsicht auf die Vorrichtung,

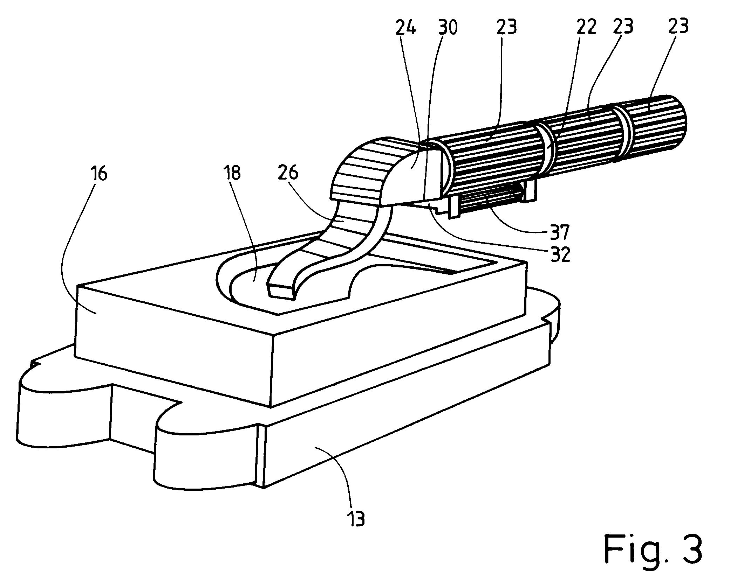

- Fig. 3: eine perspektivische Darstellung einer vergrößerten Einzelheit der Vorrichtung, nämlich eine untere Formhälfte und ein vorderes Ende eines Plastifizieraggregats,

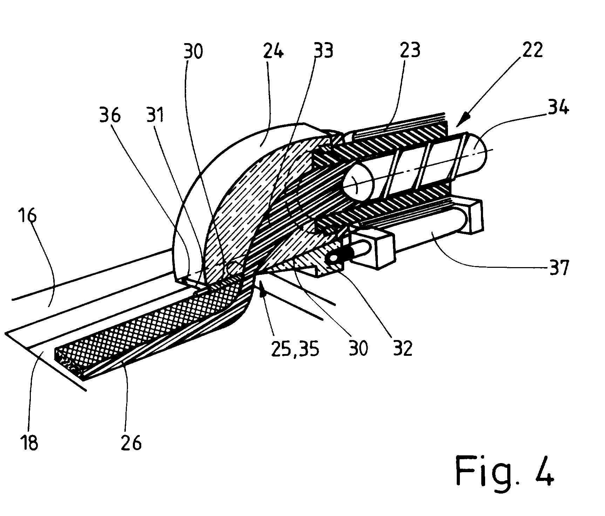

- Fig. 4: einen perspektivischen Vertikalschnitt durch die in der Fig. 3 dargestellte Einzelheit, und
- Fig. 5: eine am vorderen Ende des Plastifizieraggregats angeordnete Düse in einer Ansicht von unten gegen die Austrittsöffnung für einen Materialstrang.

Die gezeigte Vorrichtung dient zur Herstellung von Formkörpern aus Kunststoff, insbesondere einem glasfaserverstärkten Thermoplast.

Die Vorrichtung setzt sich zusammen aus einer Formträgerpresse 10 mit einer Form 11 zur Herstellung mindestens eines Formkörpers und eines Plastifizieraggregats 12, das vorzugsweise extruderartig ausgebildet ist.

Die Formträgerpresse 10 verfügt über zwei Aufspannplatten. Eine unteren Aufspannplatte 13 ist fest mit einem Sockel verbunden. Eine obere Aufspannplatte 14 ist durch einen entsprechenden Antrieb, beispielsweise eine Hydraulik, auf- und abbewegbar. Dabei wird die obere Aufspannplatte 14 gegenüber der unteren Aufspannplatte 13 an aufrechten Führungssäulen 15 geführt.

Die Aufspannplatten 13 und 14 dienen zur Befestigung der sich aus zwei Formhälften zusammensetzenden Form 11 an der Formträgerpresse 10. Eine untere Formenhälfte 16 (Formunterteil) ist auf der unteren Aufspannplatte 13 befestigt. Die obere Formhälfte 17 (Formoberteil) ist unter der auf- und abbewegbaren oberen Aufspannplatte 14 befestigt. Jede der Formhälften 16 und 17 enthält einen Teil der Kontur des herzustellenden Formkörpers. Im gezeigten Ausführungsbeispiel enthält die Form 11 nur ein einziges Nest für einen Formkörper. Dazu befindet sich in der unteren Formhälfte 16 eine aus einer Vertiefung 18 gebildete Kontur. Die obere Formhälfte 17 verfügt über eine dazu korrespondierende Kontur, bei der es sich in Abhängigkeit von der Gestalt des herzustellenden Formkörpers sowohl um eine Vertiefung als auch eine Erhöhung oder eine Kombination aus beiden handeln kann.

Das Plastifizieraggregat 12 befindet sich neben der Formträgerpresse 10. Es verfügt über ein vorzugsweise in der Höhe veränderbares Unterteil 19 und ein Oberteil 20. Das Oberteil 20 ist gegenüber dem Unterteil 19 verfahrbar.

Das Oberteil 20 verfügt über einen Vorratsbehälter 21 zur Aufnahme eines Vorrats des zu plastifizierenden Kunststoffs und ein zylinderartiges Plastifizierungsorgan, das hier als Schneckenzylinder 22 ausgebildet ist. Am Umfang des Schneckenzylinders 22 sind mehrere aufeinanderfolgende Heizungen 23 angeordnet. Ein zur Formträgerpresse 10 weisendes freies Ende des Schneckenzylinders 22 ist mit einer Düse 24 versehenen, die eine Austrittsöffnung 25 für einen Materialstrang 26 aus dem plastifizierten Kunststoff aufweist.

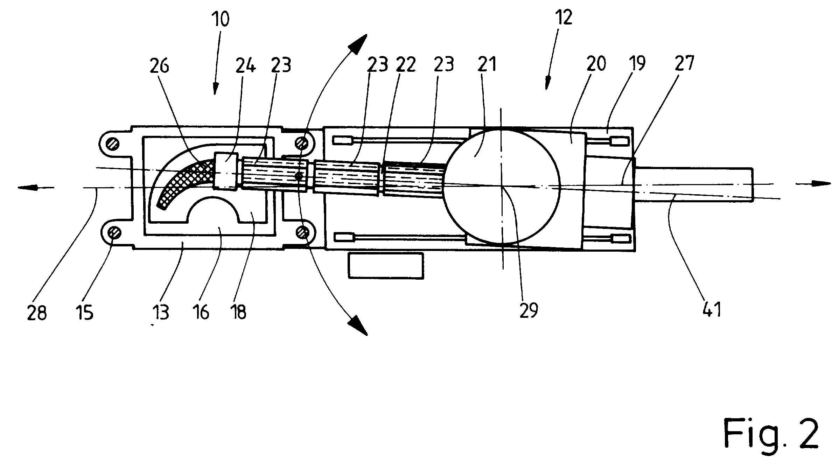

Die Anordnung des Plastifizieraggregats 12 neben der Formträgerpresse 10 ist derart getroffen, daß eine Längsmittelachse 27 des Plastifizieraggregats 12 in Verlängerung einer Längsmittelachse 28 der Formträgerpresse 10 verläuft (Fig. 2). Durch ein Verfahren des Oberteils 19 des Plastifizieraggregats 12 auf dem Unterteil 19 desselben ist ein vorderer Endbereich des Schneckenzylinders 12 mit der Düse 24 zwischen die durch Hochfahren der oberen Formhälfte 17 geöffnete Form 11 fahrbar. Dadurch kann die Düse 24 in den Einflußbereich der Formträgerpresse 10 gelangen und dort den Materialstrang 26 auf die untere Formhälfte 16 ablegen.

Eine Besonderheit der erfindungsgemäßen Vorrichtung besteht darin, daß ein Teil des Plastifizieraggregats 12, nämlich das verfahrbare Oberteil 20 desselben, gegenüber dem Unterteil 19 verschwenkbar ist um eine vertikale Schwenkachse 29. Im gezeigten Ausführungsbeispiel verläuft die Schwenkachse 29 senkrecht durch die Mitte des Vorratsbehälters 21. Gegebenenfalls kann die Schwenkachse 29 sich aber auch woanders befinden. Durch ein Verschwenken des Oberteils 20 um die Schwenkachse 29 wird die Längsmittelachse 41 des Schneckenzylinders 22 aus der Längsmittelachse 27 des Plastifizieraggregats 12 herausbewegt, so daß sich beide Längsmittelachsen 27 und 41 unter einem bestimmten Winkel schneiden (Fig. 2). Infolge der Verschwenkbarkeit des Schneckenzylinders 22 um die Schwenkachse 29 wandert die am freien Ende des Schneckenzylinders 22 angeordnete Düse 24 mit der Austrittsöffnung 25 für den Materialstrang 26 seitlich gegenüber der Längsmittelachse 28 der Formträgerpresse 10 aus. Dadurch ist es möglich, den Materialstrang 26 jeweils dort auf der unteren Formhälfte 17 abzulegen, wo es aufgrund der jeweiligen Vertiefung 18 oder einer anderen Kontur in der unteren Formhälfte 16 erforderlich ist. Durch eine Überlagerung der Schwenkbewegung des Schneckenzylinders 22 um die Schwenkachse 29 und Verfahrwegs des Oberteils des Plastifizieraggregats 12 auf der Längsmittelachse 27 fährt die Austrittsöffnung 25 der Düse 24 die obere Formhälfte 17 entlang eines Bogens ab, wodurch ein bogenförmiger Materialstrang 26 in der entsprechend bogenförmig ausgebildeten Vertiefung 18 in der unteren Formhälfte 16 ablegbar ist (Fig. 2). Durch ein ausschließliches Verfahren des Oberteils 20 gegenüber dem Unterteil 19 auf der Längsmittelachse 27 wird der Materialstrang 26 entlang der Längsmittelachse 28 der Formträgerpresse 10 abgelegt. Demgegenüber läßt sich durch ein ausschließliches Verschwenken des Schneckenzylinders 22 auf der Schwenkachse 29 der Materialstrang 26 quer zur Längsmittelachse 28 der Formträgerpresse 10 auf der unteren Formhälfte 16 ablegen.

Eine weitere Besonderheit der Erfindung besteht darin, daß der Querschnitt, insbesondere die Querschnittsfläche, der Austrittsöffnung 25 an der horizontalen Unterseite 30 der Düse 24 veränderbar ist. Dazu dienen im gezeigten Ausführungsbeispiel zwei getrennte Verschlußorgane, nämlich ein Staubalken 31 und ein Messer 32. Gegebenenfalls kann nur das Messer 32 vorhanden sein, so daß der Staubalken 31 fehlt.

In der Düse 24 befindet sich ein gebogener Kanal 33, durch den der plastifizierte Kunststoff von der Schnecke 34 im Schneckenzylinder 22 hindurchtransportierbar ist. Zur Unterseite 30 der Düse 24 hin verjüngt sich der Kanal 33 zu einem rechteckförmigen Schlitz 35. Bei zurückgezogenem Staubalken 31 und Messer 32 bildet der gesamte Schlitz 35 die rechteckförmige Austrittsöffnung 25 für den Materialstrang 26. Dieser Schlitz 35 definiert demzufolge den Maximalquerschnitt bzw. die Maximalfläche des Materialstrangs 26.

Die Dicke des Material strangs 26 ist verringerbar durch den Staubalken 31. Dazu ist der in einer formschlüssigen Führung 36 an der Unterseite 30 der Düse 24 in Richtung der Längsmittelachse 27 des Schneckenzylinders 22 hin- und herbewegbare Staubalken 31 in Richtung zum Schlitz 35 verschiebbar. Durch die Anordnung des Staubalkens 31 auf der zur Formträgerpresse 10 hingerichteten Seite des Schlitzes 35 führt eine Verschiebung des Staubalkens 31 in einer von der Formträgerpresse 10 wegweisenden Richtung zu einer Verringerung der Dicke des Materialstrangs 26. Das Messer 32 ist auf der dem Staubalken 31 gegenüberliegenden Seite des Schlitzes 35 angeordnet, und zwar ebenfalls in einer nicht gezeigten Führung an der Unterseite 30 der Düse 24. Durch einen Druckmittelzylinder 37 ist das Messer 32 auf der Längsmittelachse 27 hin- und herverschiebbar. Die Führung des Messers 32 ist gegenüber der Führung des Staubalkens 31 um die Dicke desselben nach unten versetzt, wodurch das Messer 32 mit Überlappung dichtend unter dem Staubalken 31 entlangbewegbar ist.

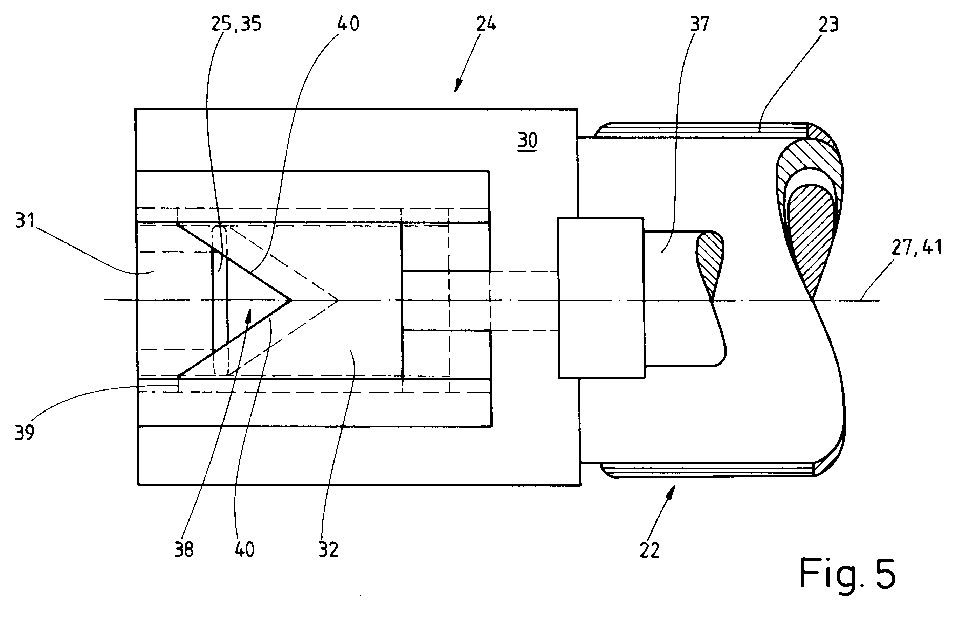

In besonderer Weise ist die Vorderseite des Messers 32 ausgebildet. Dieses verfügt im hier gezeigten Ausführungsbeispiel über eine V-förmige Ausnehmung 38, die ausgeht von der zum Staubalken 31 weisenden, quer zur Längsmittelachse 27 verlaufenden Vorderkante 39 des Messers 32. Zwei gegenüberliegende schräggerichtete Kanten 40 der Ausnehmung 38 divergieren zum Schneckenzylinder 22 hin. Die Enden der Kanten 40 treffen sich auf der Längsmittelachse 28 (Fig. 5). Alternativ kann die Ausnehmung 38 auch eine andere Geometrie aufweisen, insbesondere über anders gestaltete Flächen verfügen.

Durch ein Verschieben des Messers 32 vom Staubalken 31 hin werden gegenüberliegende Randbereiche des Schlitzes 35 zunehmend abgedeckt. Auf diese Weise ist die Breite des Schlitzes und damit die Breite des Material strangs 26 verringerbar. Durch eine umgekehrte Bewegung des Messers 32 wird die Breite des Schlitzes 35 und damit auch die Breite des Material strangs 26 vergrößert. Wird das Messer 32 in Richtung zum Staubalken 31 soweit verfahren, daß die gesamte Ausnehmung 38 den Staubalken 31 überdeckt, wird der Schlitz 35 vollständig verschlossen. Gleichzeitig wird dabei der Materialstrang 26 durchtrennt, wenn ein ausreichend langer Materialstrang 26 auf der unteren Formhälfte 16 abgelegt worden ist.

Die Dicke des Materialstrangs 26 ist weiterhin veränderbar durch die Geschwindigkeit, mit der die Düse 24 durch ein Verfahren des Oberteils 20 des Plastifizieraggregats 12 gegenüber dem Unterteil 19 verfahren wird. Außerdem kann die Dicke des Material strangs 26 durch die Austrittsgeschwindigkeit desselben aus der Düse 24 verändert werden.

Das erfindungsgemäße Verfahren läuft wie folgt ab:
In einer Ausgangsstellung ist die Form 11 geöffnet, d. h. die obere Formhälfte 17 hochgefahren. Die Dosierung ist erfolgt, indem sich Material entsprechender Menge vor der Schnecke 34 im Plastifizierzylinder des Plastifizieraggregats 12 befindet. Das Oberteil 20 des Plastifizieraggregats 12 ist soweit nach rechts (bezogen auf die Figuren) gefahren, daß die Düse 24 sich seitlich neben der Formträgerpresse 10 bzw. den Formhälften 16 und 17 befindet. Die Austrittsöffnung 25 der Düse 24 ist geschlossen durch das Messer 32 und gegebenenfalls den Staubalken 31. Die Längsmittelachse des Oberteils 19 bzw. des Schneckenzylinders 22 des Plastifizieraggregats 12 befindet sich in Deckung mit der Längsmittelachse 27 des Unterteils 19 bzw. der Längsmittelachse 28 der unteren Formhälfte 16 (Fig. 5).

Ausgehend von dieser Position wird im folgenden das Oberteil 20 des Plastifizieaggregats 12 mit dem Schneckenzylinder 22 und der Düse 24 auf der Längsmittelachse 27 nach links zwischen die geöffneten Formhälften 16 und 17 gefahren, und zwar soweit, bis die (noch geschlossene) Austrittsöffnung 25 die erforderliche äußerste (linke) Position über der Vertiefung 18 in der unteren Formhälfte 16 erreicht hat. Es wird nun der Staubalken 31 in die für das Abbewegen des Material strangs 26 erforderliche Position gebracht und gleichzeitig das Messer 32 durch den Druckmittelzylinder 37 soweit nach rechts verfahren, daß der Schlitz 35 in der Düse 24 einen Querschnitt aufweist, der der vorgesehenen Austrittsöffnung 25 für den Materialstrang 26 entspricht. Durch die Schnecke 34 des Schneckenzylinders 22 wird nun plastifizierter Kunststoff aus der Austrittsöffnung 25 herausgedrückt. Dadurch wird der Materialstrang 26 gebildet, der in der Vertiefung 18 der unteren Formhälfte 16 abgelegt wird. Gleichzeitig wird das Oberteil 20 des Plastifizieraggregats 12 auf der Längsmittelachse 27 zurückbewegt (nach rechts), wodurch die Austrittsöffnung 25 der Düse 24 sich über der Vertiefung 18 der unteren Formhälfte 16 hinwegbewegt. Hierbei wird die Position des Material strangs 26 relativ zur Vertiefung 18 in der unteren Formhälfte 16 bei Bedarf verändert durch ein Verschwenken des Schneckenzylinders 22 um die Schwenkachse 29, wodurch die Austrittsöffnung 25 im wesentlichen quer zur Längsmittelachse 28 der unteren Formhälfte 16 bewegbar ist. Diese Bewegung kann bei Bedarf zusätzlich aber auch abwechselnd zur Hauptbewegung des Plastifizieraggregats 12 auf der Längsmittelachse 27 erfolgen. Die Verschwenkung des Schwenkzylinders 22 um die Schwenkachse 29 erfolgt jeweils in einer bestimmten Richtung, die an die Kontur der Vertiefung 18 in der unteren Formhälfte 16 angepaßt ist. Der Querschnitt bzw. die Querschnittsfläche des Materialstrangs 26 wird während des Ablegens des Materialstrangs 26 auf die untere Formhälfte 16 bei Bedarf verändert durch eine Veränderung der Breite und/oder Dicke des Materialstrangs 26. Eine Veränderung der Breite des Materialstrangs 26 erfolgt durch ein kontinuierliches Hin- und Herverfahren des Messers 32 unter dem Schlitz 35 in der Düse 24, wobei die V-förmige Ausnehmung 38 im Messer 32 die Randbereiche des Schlitzes 35 an gegenüberliegenden Seiten mehr oder weniger abdeckt. Die Dicke des Materialstrangs 26 kann verändert werden durch ein entsprechendes Verfahren des Staubalkens 31, der dadurch den Schlitz 35 mehr oder weniger verkürzt. Alternativ oder zusätzlich kann die Dicke des Materialstrangs 26 verändert werden durch eine größere oder kleinere Verfahrgeschwindigkeit des Oberteils 20 des Plastifizieraggregats 12 entlang der Längsmittelachse 27. Alternativ oder zusätzlich kann die Dicke des Materialstrangs 26 noch verändert werden durch eine größere oder kleinere Austragsgeschwindigkeit des Materials durch einen entsprechenden Antrieb, insbesondere ein Verfahren der Schnecke 34 im Schneckenzylinder 22, wodurch die Austrittsgeschwindigkeit des Materialstrangs 26 aus der Austrittsöffnung 25 verkleinert oder vergrößert wird.

Nachdem die Austrittsöffnung 25 der Düse 24 das gegenüberliegende Ende der Vertiefung 18 (bezogen auf die Längsmittelachse 28) erreicht hat, wird der nunmehr eine entsprechende Länge aufweisende Materialstrang 26 durchtrennt vom Messer 32, das dazu soweit vorgefahren wird, daß es die Austrittsöffnung 25 gleichzeitig verschließt. Danach wird das Oberteil 20 des Plastifizieraggregat 12 weiter nach rechts verfahren, bis die Düse 24 vollständig aus dem Einflußbereich der Formträgerpresse 10 herausbewegt worden ist. Außerdem wird ggf. das Oberteil 20 des Plastifizieraggregats 12 verschwenkt bis die Längsmittelachse 41 in Deckung mit den Längsmittelachsen 27 und 28 gekommen ist. Es wird nun durch Herunterfahren der oberen Formhälfte 17 die Form 11 geschlossen, wobei die Formgebung des Formkörpers erfolgt. Gleichzeitig wird neues Material im Plastifizieraggregat 12 dosiert. Danach wird die obere Formhälfte 17 wieder hochgefahren, also die Form geöffnet zum Herausnehmen des fertigen Formteils aus der Form 11. Danach ist die Ausgangsposition sowohl der Formträgerpresse 10 als auch des Plastifizieraggregats 12 wieder erreicht zur Herstellung eines neuen Formkörpers.

Alle Bewegungen des Schneckenzylinders 22, nämlich die Verfahrbarkeit desselben auf der Längsmittelachse 27 und/oder die Verschwenkung um die Schwenkachse 29 erfolgen vorzugsweise kontinuierlich. Gleiches gilt für die Bewegungen des Staubalkens 31 und des Messers 32. Kontinuierlich kann auch die Austrittsgeschwindigkeit des Materialstrangs 26 aus der Düse 24 verändert werden. Dadurch ist es möglich, einen Materialstrang 26 mit einer gezielten Querschnittsfläche und einem der Kontur des herzustellenden Formkörpers entsprechenden Verlauf auf der unteren Formhälfte 16 abzulegen.

Alle ggf. erforderlichen Bewegungen und Veränderungen der Geschwindigkeiten erfolgen elektronisch nach Sollwertvorgaben, die der Kontur des herzustellenden Formkörpers entsprechen. Die Bewegungen erfolgen vorzugsweise durch hydraulisch proportionalgesteuerte Druckmittelzylinder. Kontrolliert werden die Bewegungen durch Wegemeßsysteme. Die führende Größe beim Ablegen des plastifizierten Materialstrangs 26 auf der unteren Formhälfte 16 ist die Bewegung des den Schneckenzylinder 22 aufweisenden Oberteils 20 des Plastifizieraggregats 12 auf der Längsmittelachse 27 beim Zurückfahren der Düse 24 aus dem Bereich der Formträgerpresse 10. Bedarfsweise werden mit dieser Bewegung weitere Bewegungen überlagert, insbesondere die Schwenkbewegung des Schneckenzylinders 22 um die Schwenkachse 29, das Verändern der Position des Messers 32 und/oder des Staubalkens 31 und gegebenenfalls die Verfahrgeschwindigkeit des Schneckenzylinders 22 mit der Düse 24 sowie die Austrittsgeschwindigkeit des plastifizierten Materialstrangs 26 aus der Austrittsöffnung 25 der Düse 24.

## Patentansprüche

1. Verfahren zum Einlegen eines Materialstrangs in eine vorzugsweise zwei Formhälften aufweisende Form, wobei der Materialstrang bei geöffneter Form auf einer Formhälfte abgelegt wird, **dadurch gekennzeichnet**, daß der Querschnitt des Materialstrangs (26) und/oder seine Relativlage zur Formhälfte (16) bedarfsweise unter Berücksichtigung der Kontur des herzustellenden Formkörpers verändert werden.

2. Verfahren nach Anspruch 1, dadurch gekennzeichnet, daß der Querschnitt, insbesondere die Querschnittsfläche, und/oder die Relativlage des Materialstrangs (26) kontinuierlich verändert werden.

3. Verfahren nach Anspruch 1 oder 2, dadurch gekennzeichnet, daß die Relativposition des Materialstrangs (26) zur Formhälfte (16) verändert wird durch eine Bewegung desselben in eine von der Längsrichtung (20) der Formhälfte (16) abweichenden Richtung, insbesondere durch eine Verlagerung der Längsmittelachse (27) mindestens eines Teils des Plastifizieraggregats (12) relativ zur Längsmittelachse (28) der Formhälfte (16).

4. Verfahren nach Anspruch 1 oder 2, dadurch gekennzeichnet, daß der Querschnitt, insbesondere die Querschnittsfläche, des Materialstrangs (26) verändert wird durch insbesondere eine Verkleinerung und/oder Vergrößerung einer Austrittsöffnung (25) des Materialstrangs (26) aus einem Plastifizieraggregat (12).

5. Verfahren nach einem oder mehreren der Ansprüche 1 bis 3, dadurch gekennzeichnet, daß der Querschnitt bzw. die Querschnittsfläche des Material strangs (26) verändert wird durch insbesondere eine Vergrößerung und/oder Verkleinerung der Austrittsgeschwindigkeit des Material strangs (26) aus der Austrittsöffnung (25) des Plastifizieraggregats (12) und/oder eine Veränderung der Bewegungsgeschwindigkeit der Austrittsöffnung (25) des Plastifizieraggregats (12) gegenüber der Formhälfte (16).

6. Vorrichtung zum Einlegen eines Materialstrangs in eine vorzugsweise zwei zusammen- und auseinanderfahrbare Formhälften aufweisende Form, mit einem Plastifizieraggregat, das an einem Ende eine zwischen den geöffneten Formhälften längsgerichtet verfahrbare Austrittsöffnung für den Materialstrang aufweist, dadurch gekennzeichnet, daß der Querschnitt der Austrittsöffnung (25) veränderbar ist und/oder die Austrittsöffnung (25) quergerichtet zwischen den Formhälften (16, 17) verfahrbar ist.

7. Vorrichtung nach Anspruch 6, dadurch gekennzeichnet, daß der Austrittsöffnung (25) mindestens ein relativ zu derselben bewegliches Verschlußorgan zugeordnet ist, insbesondere das Verschlußorgan zur Verringerung und/oder Vergrößerung mindestens der Breite der Austrittsöffnung (25) ausgebildet ist.

8. Vorrichtung nach Anspruch 7, dadurch gekennzeichnet, daß das Verschlußorgan eine Ausnehmung (38) aufweist, deren Breite sich längs zur Bewegungsrichtung des Verschlußorgans verändert.

9. Vorrichtung nach einem oder mehreren der Ansprüche 8 bis 11, dadurch gekennzeichnet, daß der Querschnitt, insbesondere die Dicke des Material strangs (26) veränderbar ist durch eine Verschiebung eines separaten (zweiten) Verschlußorgans gegenüber der Austrittsöffnung (25).

10. Vorrichtung nach einem oder mehreren der Ansprüche 7 bis 9, dadurch gekennzeichnet, daß ein Verschlußorgan gleichzeitig zum Durchtrennen des Material strangs (26) ausgebildet ist.

11. Vorrichtung nach einem oder mehreren der Ansprüche 6 bis 10, dadurch gekennzeichnet, daß mindestens ein eine Düse (24) zum Austritt des Material strangs (26) aufweisender Teil des Plastifizieraggregats (12) um eine vertikale Schwenkachse (29) verschwenkbar ist zur Erzeugung einer quergerichteten Bewegung der Austrittsöffnung (25) zur Längsmittelachse (28) der Formhälfte (16).
